# EUROPEAN PATENT SPECIFICATION

(11) **EP 3 932 698 B1**
(45) Date of publication and mention of the grant of the patent: **10.05.2023**
(21) Application number: 21164799.5
(22) Date of filing: 25.03.2021
(51) Int. Cl.: B60C 27/06

(54) **AN ANTI-SKID DEVICE**
ANTIRUTSCHVORRICHTUNG
DISPOSITIF D'ANTIDÉRAPAGE

(30) Priority: 29.06.2020 IT 202000015655
(43) Date of publication of application: 05.01.2022
(73) Proprietor: Lampa S.p.A., 46019 Viadana (MN) (IT)
(72) Inventor: MARUTTI, Paolo, 46019 VIADANA (MN) (IT)
(74) Representative: Monelli, Alberto

(56) References cited:
- EP-A1- 0 298 906
- EP-A1- 2 050 593
- WO-A1-2006/106442
- DE-U1- 8 814 916

## Description

The present invention relates to an anti-skid device for a vehicle wheel, typically a "spider chain" system.

In the technical language the expression "spider chain" is well-known and comprises a central fastening system to the wheel rim and peripheral elements which are superposed on the tyre tread to carry out an anti-skid action.

Spider chains are known in which there are supports for two flanked chain portions present on the tread. The two portions are constrained to a support by means of a corresponding bracket bent in a U-shape. Two of these brackets are used (one for each chain portion). The brackets are applied to opposite axial ends of the support, with an axial direction that is understood to be the rotation direction of the wheel.

Each bracket is constituted by two parallel arms reciprocally connected by a joining portion (which defines the base of the U). The two parallel arms fit into corresponding links of a same chain portion.

The brackets enable retaining the two flanked portions of chain in position, preventing undesired displacements due to stresses.

One drawback of this solution is linked to the fact that the brackets are additional components and the application thereof requires extra time.

In this context, the technical task underpinning the present invention is to provide an anti-skid device for a vehicle wheel that enables accelerating the assembly thereof, optimising the number and cost of the components without penalising the ability to absorb any stresses originating from the functioning, thus offering excellent resistance to fatigue.

Anti-skid devices are also disclosed by DE8814916 and WO2006/106442, wherein WO2006/106442 is showing an anti-skid device according to the preamble of claim 1.

The technical task set and the objects specified are substantially attained by an anti-skid device, comprising the technical characteristics as set out in one or more of the accompanying claims.

Further characteristics and advantages of the present invention will become more apparent from the following indicative, and hence nonlimiting, description of a preferred, but not exclusive, embodiment of an anti-skid device as illustrated in the appended drawings, in which:

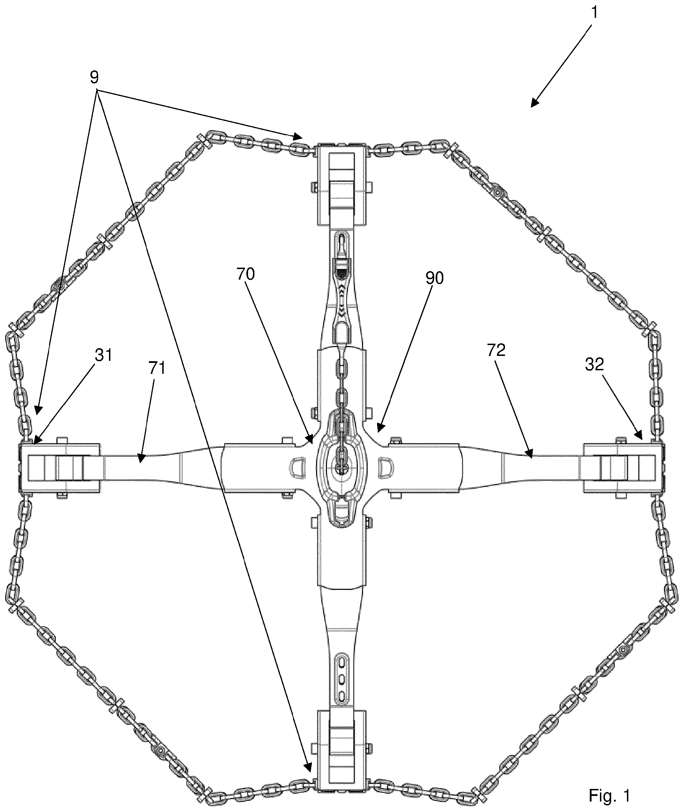

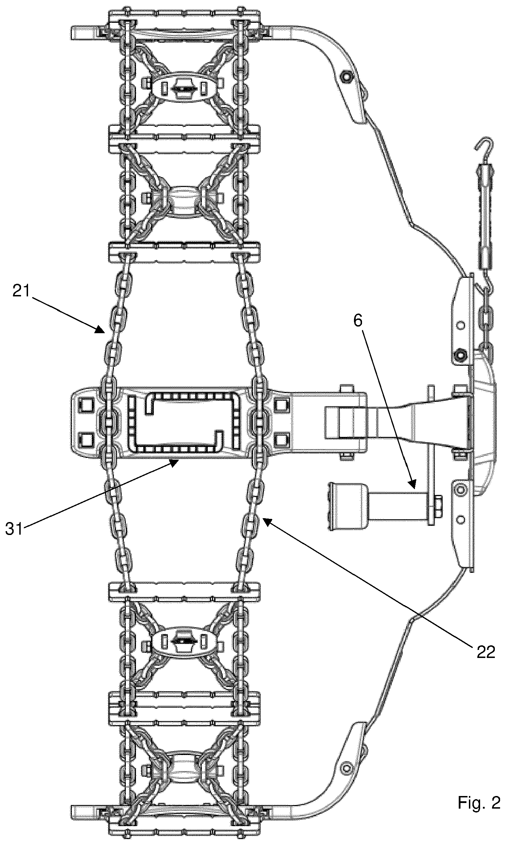

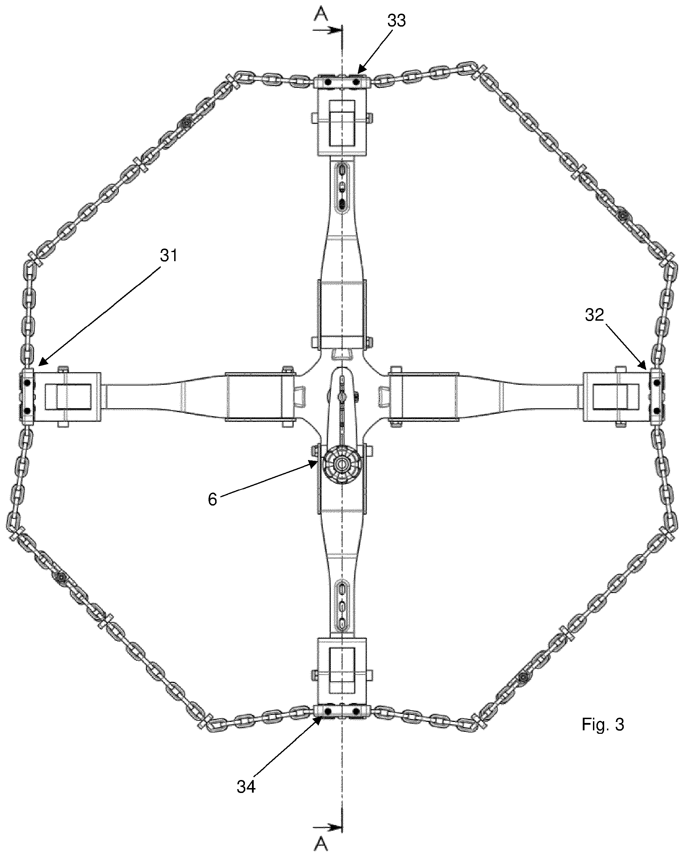

- figures 1, 2 and 3 are respectively a front, side and rear view of an anti-skid device according to the present invention;

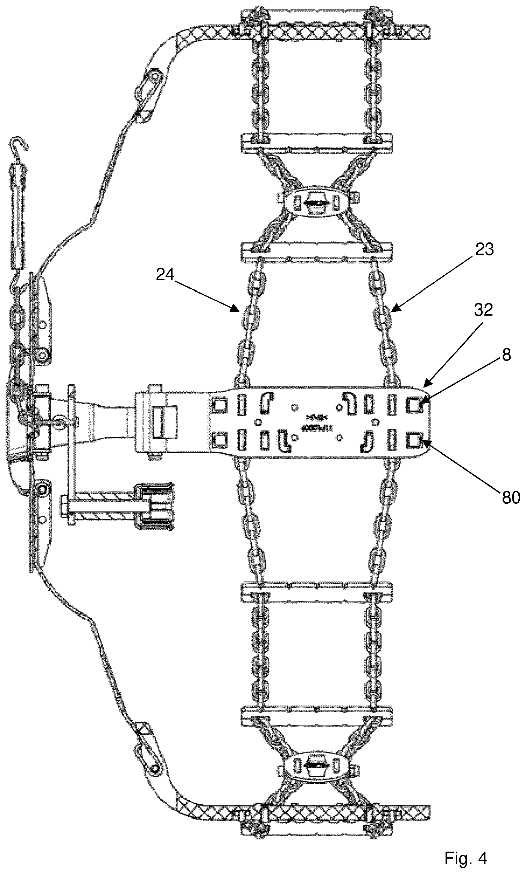

- figure 4 is a section view along plane A-A of figure 3;

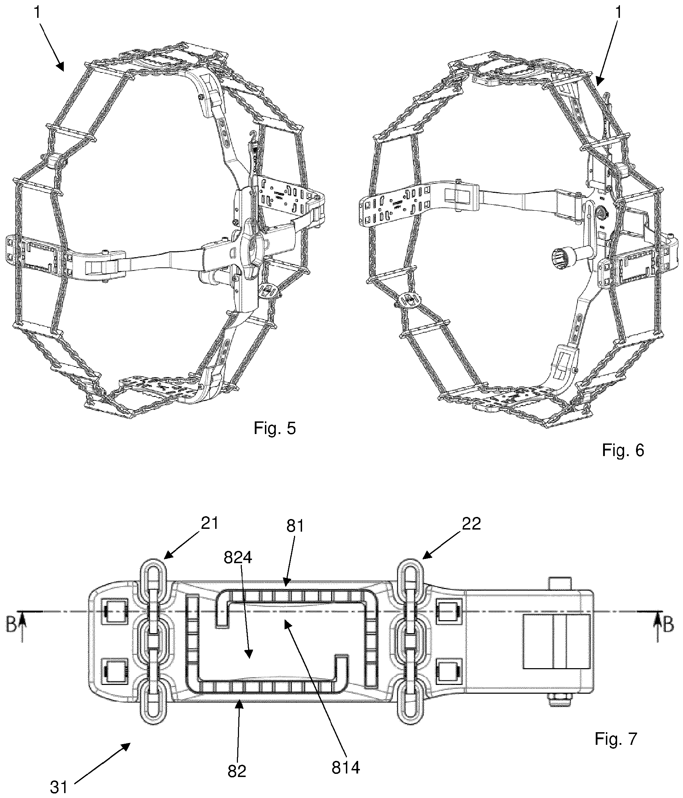

- figures 5 and 6 show two perspective views of an anti-skid device according to the present invention;
- figure 7 illustrates a detail of an anti-skid device according to the present invention;

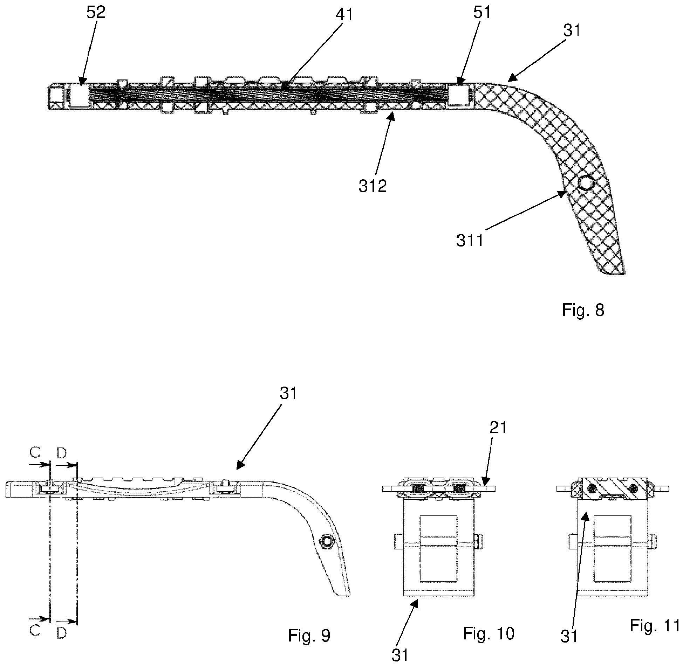

- figure 8 is a view according to section plane B-B of figure 7;
- figure 9 is a lateral view of the detail of figure 7;
- figures 10 and 11 are respectively views along planes C-C and D-D of figure 9;

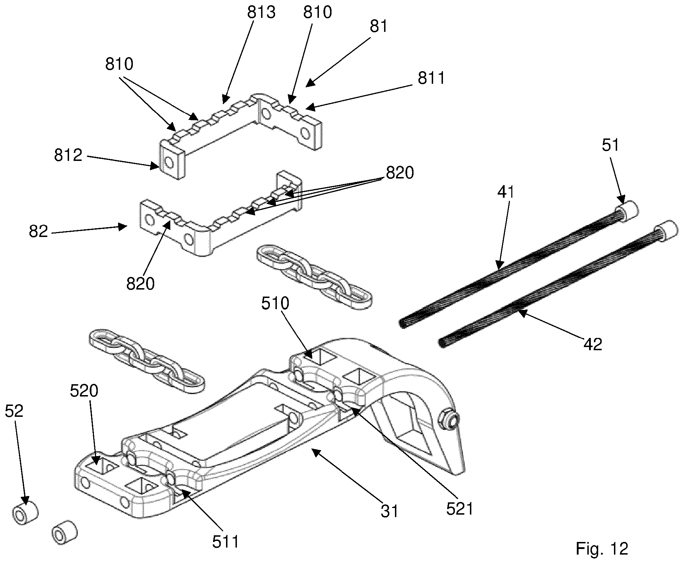

- figure 12 is an exploded view of the detail of figure 7;

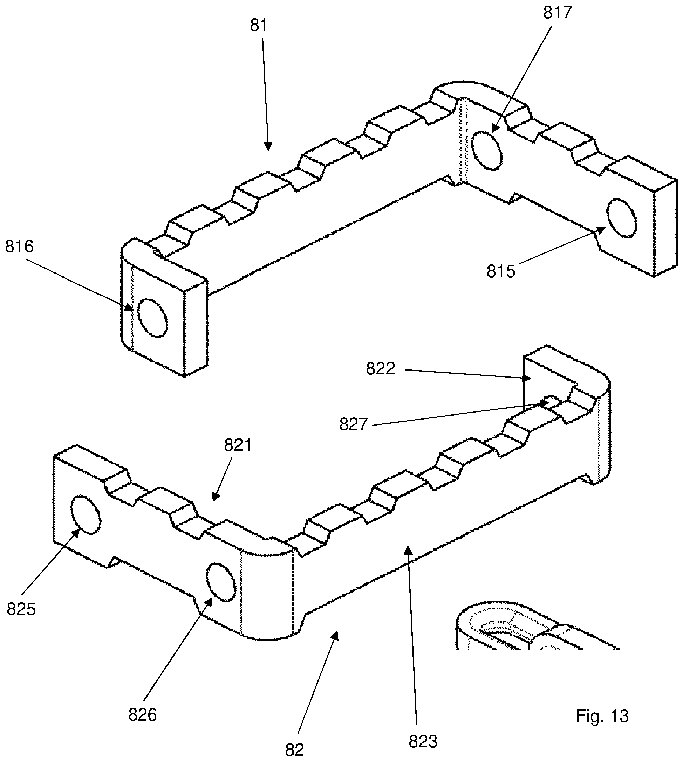

- figure 13 illustrates a detail in larger scale of figure 12.

In the accompanying drawings, reference numeral 1 indicates an anti-skid device for a wheel of a vehicle.

The anti-skid device 1 is advantageously of the "spider chain" type.

The device 1 comprises a first and a second portion 21, 22 of chain, flanked to one another and destined to extend along a development of a tread of the wheel. The first and the second portion 21, 22 are part of two separate chains. The first and the second portion 21, 22 might be parallel, or not. The first portion 21 is part of a first chain. The second portion 22 is part of a second chain. The first chain appropriately surrounds the tread by 360° without interruptions. The first chain thus surrounds the rotation axis of the wheel. It develops about the axis. The links of the first chain extend one following another without interruptions. All the links are therefore mutually connected without interruptions. The first chain is closed on itself. Likewise the second chain entirely surrounds the tread, appropriately without interruptions. The second chain is closed on itself.

The device 1 comprises a first support 31 of the first and the second portion 21, 22 of chain. The first support 31 is destined to at least partly superpose on a tread of the wheel (i.e. the tyre). The first support 31 is at least partly interposed between the first and the second portion 21, 22 of chain and the tread. The first support 31 comprises:
- a first portion 311 which extends from a radially more inner position to a radially more outer position; and
- a second portion 312 which is destined to surmount the tread.

The device 1 appropriately comprises at least a first connecting element 41 for connecting the first and the second portion 21, 22 of chain. The first connecting element 41 is located at the first support 31. The first connecting element 41 appropriately extends internally of the first support 31. The first connecting element 41 is at least partly incorporated in said first support 31. The first support 31 comprises at least a channel (typically having transversal sections with a closed perimeter) which runs along it transversally to the first and the second portion 21, 22 of chain and houses the first connecting element 41.

The first connecting element 41 is advantageously flexible. The first connecting element 41 is appropriately a longitudinal element, typically straight. It is for example a flexible bar. The bar can be flexed and elastically return into the original position. The bar appropriately has a section that is perpendicular to the prevalent extension direction having an area comprised between 0.28 cm² and 1.13 cm² (or having a radius comprised between 0.3 and 0.6 centimetres). The first connecting element 41 is preferably made of a metal material. For example they might comprise a plurality of (typically) interwoven metal wires. The above-mentioned flexible cable can in fact comprise a plurality of strands (preferably more than 10, advantageously 19) woven to one another. In this way resistance to fatigue is optimised.

The first connecting element 41 crosses a link of the first portion 21 of chain and a link of the second portion 22 of chain. The first and the second portion 21, 22 of chain comprise a succession of annular links, linked to one another.

The first connecting element 41 is appropriately confined in the thickness of the first support 31. The first connecting element 41, for at least 75% of the longitudinal extension thereof, is appropriately concealed inside the first support 31 (in an operating configuration in which the first support 31 and first connecting element 41 are assembled).

The device 1 comprises a first and a second abutment 51, 52 which retain the first connecting element 41 in position. The first and the second abutment 51, 52 are located at two ends of said first connecting element 41. The first abutment 51 is appropriately constrained to or incorporated in a single body with said first connecting element 41.

The second abutment 52 is appropriately constrainable (for example by interference or screwing) to the first connecting element 41. In this way the increase of the transversal section at the ends prevents the extraction of the first connecting element 41 from the first support 31.

The first and the second abutment 51, 52 are applied to the first connecting element 41 outside a zone interposed between the first and the second portion 21, 22 of chain.

The first support 31 appropriately defines a first and a second seat 510, 520 for housing respectively the first and the second abutment 51, 52. The first seat 510 appropriately defines a through-hole through the first support 31 and transversally delimited (surrounded) by the first support 31. Likewise the second seat 520 defines a through-hole through the first support 31 and transversally delimited (surrounded) by the first support 31. The first and the second seat 510, 520 cross the thickness of the first support 31.

The first support 31 defines a first housing 511 for the first portion 21 of chain and/or a second housing 521 for the second portion 22 of chain. The first housing 511 is preferably complementarily shaped with respect to the first portion 21 of chain. Therefore, a profile of the first portion 21 of chain is made in the first support 31. The second housing 521 is complementarily shaped with respect to the second portion 22 of chain. Therefore, a profile of the second portion 22 of chain is made in the first support 31. In the accommodating direction of the first and the second portion 21, 22 of chain, the first and second housing 511, 521 appropriately extend parallel to each other.

The first support 31 is preferably made of a plastic or elastomeric material. It is therefore flexible. As mentioned in the foregoing, the first flexible element 41 is made of a metal material.

The device 1 appropriately comprises a second connecting element 42 for connecting the first and the second portion 21, 22 of chain. The second connecting element 42 is flexible and flanked to the first connecting element 41 at the first support 31. One or more of the characteristics described with reference to the first connecting element 41 can appropriately be repeated for the second connecting element 42. In the preferred embodiment the second connecting element 42 is advantageously a flexible element.

The device 1 comprises a crown 9 along which the first support 31 is located and a central anchoring portion 90 (hub) to the wheel. The crown 9 is destined to superpose on the tread.

The device 1 comprises an anchoring structure 6 to a wheel, for example a fastening bolt of the wheel of the vehicle. The anchoring structure 6 is located at the central portion. The first support 31 is connected to said anchoring structure 6.

The device 1 comprises a second support 32 of a third and fourth portion 23, 24 of chain that are flanked to one another. The second support 32 is destined to superpose on the tread. The second support 32 is at least partly interposed between the tread and the third and fourth portion 23, 24 of chain. The first and third portion 21, 23 of chain are advantageously part of a same chain. Likewise, the second and fourth portion 22, 24 of chain are part of a same chain. The second support 32 is located along the crown 9 of the device 1. The first and the second support 31, 32 are appropriately in directly opposite positions. Along the crown 9, the device 1 appropriately comprises a third and a fourth support 33, 34 of corresponding pairs of portions of chain. The third and fourth support 33, 34 are appropriately diametrically opposite one another and are connected by a directrix which is rotated by 90° with respect to a directrix that connects the first and the second support 31, 32. What has been disclosed with reference to the first or second support 31, 32 can appropriately be repeated for the third and/or fourth support 33, 34.

The device 1 advantageously comprises at least a first flexible rod 8 for connecting the third and the fourth portion 23, 24 of chain. The first flexible rod 8 is located at the second support 32. The first flexible rod 8 appropriately extends inside the second support 32. The first flexible rod 8 is at least partly incorporated in the second support 32.

The first flexible rod 8 is made of a metal material. One or more of the characteristics described with reference to the first connecting element 41 can appropriately be repeated for the first flexible rod 8. The first flexible rod 8 is advantageously flanked by a second flexible rod 80 which connects the third and the fourth portion 23, 24 of chain at the second support 32. The first and/or the second rod 8, 80 can be made from a metal element having a prevalent longitudinal extension comprising a plurality of strands woven to one another.

One or more of the previously described features in relation to the first support 31 and the interaction thereof with the first and the second portion 21, 22 of chain can be repeated for the second support 32 and the interaction thereof with the third and fourth portion 23, 24 of chain.

The first support 31 comprises first anti-skid means 81, comprising a plurality of anti-skid teeth 810 being part of a single piece (in a single monolithic body) and destined to carry out the action thereof on a road surface.

The first anti-skid means 81 comprise/are an insert partly incorporated in the first support 31. The first anti-skid means 81 are appropriately made of a metal material. The first anti-skid means 81 are inserted partly in the first support 31.

The first anti-skid means 81 comprise/are a bar.

The teeth, in a single body with one another, are appropriately flanked to one another along an extension direction of the bar.

Appropriately though not necessarily, the bar comprises a first arm 811, a second arm 812 and a connecting zone 813 of the first and the second arm 811, 812. The first arm 811, the second arm 812 and the connecting zone 813 define, in combination, a first concavity 814. Preferably but not necessarily, the first and the second arm 811, 812 are parallel to one another. They are preferably two straight portions. The connecting zone 813 appropriately comprises a straight portion perpendicular to the first and the second arm 811, 812.

The first arm 811 is appropriately longer than the second arm 812. The connecting zone 813 is appropriately longer than the first arm 811 and/or the second arm 812. The connecting zone 813 has a prevalent extension direction destined to be arranged parallel to the width of the tread (along a parallel direction to the direction of the rotation axis of the wheel).

The first anti-skid means 81 comprise at least four teeth 810 arranged in said connecting zone 813. At least one tooth, preferably two, is/are appropriately located along the first and/or the second arm 811, 812.

The second arm 812 comprises a first hole 816. The first connecting element 41 transits in the first hole 816.

The first arm 811 comprises a second hole 815 in which the second connecting element 42 transits. The passage of the first and second element 41, 42 respectively into the first and the second hole 816, 815 enables stabilising the system and preventing tilting.

The first arm 811 appropriately also comprises an additional hole 817 in which the first connecting element 41 transits. The first hole 816 and the additional hole 817 are coaxial.

The device 1 appropriately comprises second anti-skid means 82 incorporating in a single body a plurality of anti-skid teeth 820 destined to carry out the action thereof on a road surface. In other words the second anti-skid means 82 comprise a plurality of anti-skid teeth 820 being part of a single piece (in a single monolithic body). The second anti-skid means 82 extend along an extension line along which the anti-skid teeth 820 are arranged in succession.

The extension line of the second anti-skid means 82 defines a second concavity 824. The first and said second concavity 814, 824 are faced to one another. The second anti-skid means 82 preferably comprise a first and a second segment 821, 822 which extend transversally from an intermediate segment 823. The first and the second segment 821, 822 are appropriately parallel to one another. They are appropriately perpendicular to the intermediate segment 823.

The second anti-skid means 82 comprise at least two passage holes 825, 826 in which the first and the second connecting element 41, 42 respectively transit. The two passage holes 825, 826 are appropriately arranged along the first segment 821. One of said two holes 825 is appropriately coaxial to the first hole 816 and the other to the second hole 815. The second anti-skid means 82 appropriately comprise a further passage hole 827 in which the second connecting element 42 transits. The further passage hole 827 is made in the second segment 822.

More generally, the first and/or the second anti-skid means 81, 82 are crossed by the first and/or the second connecting element 41, 42.

The central anchoring portion connects to the first and second support 31, 32 respectively by means of a first and a second spoke 71, 72. The first and the second spoke 71, 72 appropriately extend substantially in a radial direction.

In fact the device 1 comprises a plurality of spokes 71, 72 which at a radially more inner end connect in a joining zone 70; one of said spokes 71, in a radially more outer position, is associated to said first support 31. The present invention achieves important advantages.

Primarily this enables a rapid and fast assembly linked in particular to the simplicity with which the first connecting element 41 is connected both to the first and to the second portion of chain 21, 22.

A further important advantage is linked to the sturdiness of the system associated to the flexibility thereof, this being obtained by means of a flexible connecting element 41. This enables optimising resistance to fatigue.

The invention as it is conceived is susceptible to numerous modifications and variants, as defined by the appended claims.

## Claims

1. An anti-skid device for a vehicle wheel comprising:
- a first and a second portion (21, 22) of chain, flanked to one another and destined to extend along a development of a tread of the wheel;
- a first support (31) of the first and the second portion (21, 22) of chain, said first support (31) being destined to at least partly superpose on a tread of the wheel;
- at least a first connecting element (41) for connecting the first and the second portion (21, 22) of chain, located at the first support (31), said first connecting element (41) being a flexible bar;
**characterised in that** said first connecting element (41) crosses a link of the first portion (21) of chain and a link of the second portion (22) of chain; the first portion (21) is part of a first chain; the first chain surrounding the rotation axis of the wheel without interruption;
the second portion (22) is part of a second chain; the second chain is closed on itself.

2. The device according to claim 1, **characterised in that** the first connecting element (41) is at least partly incorporated in said first support (31).

3. The device according to claim 1 or 2, **characterised in that** it comprises a second connecting element (42) for connecting the first and the second portion (21, 22) of chain, the second connecting element (42) being flexible and flanked to the first connecting element (41) at the first support (31).

4. The device according to any one of the preceding claims, **characterised in that** it comprises a first and a second abutment (51, 52) for retaining in position are applied to said first connecting element (41) and located at two ends of said first connecting element (41); said first and said second abutment (51, 52) are applied outside a zone interposed between the first and the second portion (21, 22) of chain.

5. The device according to claim 4, **characterised in that** said first support (31) defines a first and a second seat (510, 520) for housing the first and the second abutment (51, 52).

6. The device according to any one of the preceding claims, **characterised in that** said first support (31) defines a first housing (511) for the first portion (21) of chain and a second housing (521) for the second portion (22) of chain.

7. The device according to any one of the preceding claims, **characterised in that** said first support (31) is made of a plastic or elastomeric material, said first flexible element (41) is a flexible cable having a prevalent longitudinal extension comprising a plurality of metal strands woven together.

8. The device according to any one of the preceding claims, **characterised in that** it comprises an anchoring structure (6) to a wheel, said first support (31) being connected to said anchoring structure (6).

9. The device according to claim 8, **characterised in that** it comprises a second support (32) of a third and fourth portion (23, 24) of chain that are flanked to one another, said anchoring structure (6) connecting to the first and second support (31, 32) respectively by means of a first and a second spoke (71, 72).

10. The device according to any one of the preceding claims, **characterised in that** the first support (31) comprises first anti-skid means (81) comprising a plurality of anti-skid teeth (810) being part of a single piece in a single monolithic body and destined to carry out the action thereof on a road surface; the first anti-skid means (81) being crossed by the first connecting element (41).

## Patentansprüche

1. Antirutschvorrichtung für ein Fahrzeugrad, umfassend:
- einen ersten und einen zweiten Kettenabschnitt (21, 22), nebeneinander angeordnet und dazu bestimmt, sich entlang einer Entwicklung einer Lauffläche des Rads auszudehnen;
- eine erste Halterung (31) des ersten und des zweiten Kettenabschnitts (21, 22), wobei die erste Halterung (31) dazu bestimmt ist, eine Lauffläche des Rads mindestens teilweise zu überlagern;
- mindestens ein erstes Verbindungselement (41), um den ersten und den zweiten Kettenabschnitt (21, 22) zu verbinden, angeordnet an der ersten Halterung (31), wobei das erste Verbindungselement (41) ein flexibler Stab ist,
**dadurch gekennzeichnet, dass** das erste Verbindungselement (41) ein Bindeglied des ersten Kettenabschnitts (21) und ein Bindeglied des zweiten Kettenabschnitts (22) quert,
der erste Abschnitt (21) Teil einer ersten Kette ist, wobei die erste Kette die Rotationsachse des Rads unterbrechungslos umgibt,
der zweite Abschnitt (22) Teil einer zweiten Kette ist, wobei die zweite Kette auf sich selbst geschlossen ist.

2. Vorrichtung nach Anspruch 1, **dadurch gekennzeichnet, dass** das erste Verbindungselement (41) mindestens teilweise in die erste Halterung (31) integriert ist.

3. Vorrichtung nach Anspruch 1 oder 2, **dadurch gekennzeichnet, dass** sie ein zweites Verbindungselement (42) umfasst, um den ersten und den zweiten Kettenabschnitt (21, 22) zu verbinden, wobei das zweite Verbindungselement (42) flexibel ist und das erste Verbindungselement (41) an der ersten Halterung (31) flankiert.

4. Vorrichtung nach einem der vorhergehenden Ansprüche, **dadurch gekennzeichnet, dass** sie einen ersten und einen zweiten Anschlag (51, 52) zur Beibehaltung der Position umfasst, die am ersten Verbindungselement (41) angebracht und an zwei Enden des ersten Verbindungselements (41) angeordnet sind, wobei der erste und der zweite Anschlag (51, 52) außerhalb einer Zone angebracht sind, die zwischen dem ersten und dem zweiten Kettenabschnitt (21, 22) eingesetzt ist.

5. Vorrichtung nach Anspruch 4, **dadurch gekennzeichnet, dass** die erste Halterung (31) einen ersten und einen zweiten Sitz (510, 520) zur Aufnahme des ersten und des zweiten Anschlags (51, 52) definiert.

6. Vorrichtung nach einem der vorhergehenden Ansprüche, **dadurch gekennzeichnet, dass** die erste Halterung (31) eine erste Aufnahme (511) für den ersten Kettenabschnitt (21) und eine zweite Aufnahme (521) für den zweiten Kettenabschnitt (22) definiert.

7. Vorrichtung nach einem der vorhergehenden Ansprüche, **dadurch gekennzeichnet, dass** die erste Halterung (31) aus einem Kunststoff- oder Elastomermaterial besteht, wobei das erste flexible Element (41) ein flexibles Kabel ist, aufweisend eine vorwiegende Längsausdehnung, umfassend eine Vielzahl von miteinander verwobenen Litzen.

8. Vorrichtung nach einem der vorhergehenden Ansprüche, **dadurch gekennzeichnet, dass** sie eine Struktur zur Verankerung (6) an einem Rad umfasst, wobei die erste Halterung (31) mit der Verankerungsstruktur (6) verbunden ist.

9. Vorrichtung nach Anspruch 8, **dadurch gekennzeichnet, dass** sie eine zweite Halterung (32) eines dritten und eines vierten Kettenabschnitts (23, 24) umfasst, die aneinander flankiert sind, wobei die Verankerungsstruktur (6) jeweils mittels einer ersten und einer zweiten Speiche (71, 72) mit der ersten und der zweiten Halterung (31, 32) verbunden ist.

10. Vorrichtung nach einem der vorhergehenden Ansprüche, **dadurch gekennzeichnet, dass** die erste Halterung (31) erste Antirutschmittel (81) umfasst, die eine Vielzahl von Antirutschzähnen (810) umfassen, die zu einem einzelnen Stück in einem einzelnen monolithischen Körper gehören und dazu bestimmt sind, ihre Wirkung auf eine Straßenoberfläche auszuüben, wobei die Antirutschmittel (81) vom ersten Verbindungselement (41) gequert sind.

## Revendications

1. Dispositif d'antidérapage pour une roue de véhicule, comprenant :
- une première et une deuxième partie (21, 22) de chaîne, flanquées l'une à l'autre et destinées à se prolonger le long d'un développement d'une bande de roulement de la roue ;
- un premier support (31) de la première et de la deuxième partie (21, 22) de la chaîne, ledit premier support (31) étant destiné à au moins partiellement se superposer à une bande de roulement de la roue ;
- au moins un premier élément de raccordement (41) pour raccorder la première et la deuxième partie (21, 22) de la chaîne, situé en correspondance du premier support (31), ledit premier élément de raccordement (41) étant une barre flexible ;
**caractérisé en ce que** ledit premier élément de raccordement (41) traverse un maillon de la première partie (21) de la chaîne et un maillon de la deuxième partie (22) de la chaîne ;
la première partie (21) fait partie d'une première chaîne ; la première chaîne entourant l'axe de rotation de la roue sans interruption ;
la deuxième partie (22) fait partie d'une deuxième chaîne ; la deuxième chaîne est fermée sur elle-même.

2. Dispositif selon la revendication 1, **caractérisé en ce que** le premier élément de raccordement (41) est au moins partiellement incorporé dans ledit premier support (31) .

3. Dispositif selon la revendication 1 ou 2, **caractérisé en ce qu'**il comprend un deuxième élément de raccordement (42) pour raccorder la première et la deuxième partie (21, 22) de la chaîne, le deuxième élément de raccordement (42) étant flexible et flanqué du premier élément de raccordement (41) en correspondance du premier support (31).

4. Dispositif selon l'une quelconque des revendications précédentes, **caractérisé en ce qu'**il comprend une première et une deuxième butée (51, 52) de retenue en position qui sont appliquées audit premier élément de raccordement (41) et situées à deux extrémités dudit premier élément de raccordement (41) ; ladite première et ladite deuxième butée (51, 52) sont appliquées à l'extérieur d'une zone interposée entre la première et la deuxième partie (21, 22) de chaîne.

5. Dispositif selon la revendication 4, **caractérisé en ce que** ledit premier support (31) définit un premier et un deuxième siège (510, 520) pour loger la première et la deuxième butée (51, 52).

6. Dispositif selon l'une quelconque des revendications précédentes, **caractérisé en ce que** ledit premier support (31) définit un premier logement (511) pour la première partie (21) de chaîne et un deuxième logement (521) pour la deuxième partie (22) de chaîne.

7. Dispositif selon l'une quelconque des revendications précédentes, **caractérisé en ce que** ledit premier support (31) est constitué d'un matériau plastique ou élastomère, ledit premier élément flexible (41) est un câble flexible ayant une extension longitudinale prédominante comprenant une pluralité de brins métalliques tissés ensemble.

8. Dispositif selon l'une quelconque des revendications précédentes, **caractérisé en ce qu'**il comprend une structure d'ancrage (6) à une roue, ledit premier support (31) étant relié à ladite structure d'ancrage (6).

9. Dispositif selon la revendication 8, **caractérisé en ce qu'**il comprend un deuxième support (32) d'une troisième et d'une quatrième partie (23, 24) de chaîne qui sont flanquées l'une à l'autre, ladite structure d'ancrage (6) se raccordant au premier et au deuxième support (31, 32) respectivement au moyen d'un premier et d'un deuxième rayon (71, 72).

10. Dispositif selon l'une quelconque des revendications précédentes, **caractérisé en ce que** le premier support (31) comprend des premiers moyens antidérapants (81) comprenant une pluralité de dents antidérapantes (810) faisant partie d'une seule pièce dans un seul corps monolithique et destinées à exercer leur action sur une surface de roulement ; les premiers moyens antidérapants (81) étant traversés par le premier élément de raccordement (41).
